# EUROPEAN PATENT APPLICATION

(11) **EP 0 617 374 A1**
(43) Date of publication of application: **28.09.1994**
(21) Application number: 94104197.2
(22) Date of filing: 17.03.1994
(51) Int. Cl.: G06F 15/72, G06F 3/12

(54) **A data processing system for printing screen information**

(30) Priority: 26.03.1993 JP 67925/93
(71) Applicant: International Business Machines Corporation, Armonk, N.Y. 10504 (US)
(72) Inventor: Akiyama, Akira, Yamato-shi, Kanagawa-ken (JP)
(74) Representative: Burt, Roger James, Dr.

(57) **Abstract**

The present invention enables efficient production of graphical page configurations, for instance a specification, a user's guide, etc., of an application program having a graphical user interface. An image is produced on a screen which causes an association with a printing result but is simpler in constitution than the printing result. This is achieved, for instance, by using image fonts such as character fonts and graphic fonts.

A data processing system in accordance with the present invention has a processor, a storage device, a display device, and is connectable to a printing apparatus, the system further comprising visualisation means for generating a screen image on the display device from a screen image file stored in the storage device, and a printing means for sending print information to the printing apparatus based on a print image file stored in the storage device and relating to the screen image file, the system being characterised by: the screen image file representing a screen image which is simpler in form than a printed image created by the printing apparatus from the corresponding print image file; and generation means for creating the print image file from the screen image file with reference to translating means in the storage device relating elements in the screen image file with specific printing elements to be included in the print image file.

When printing, a printing result including fine detailed figures and pictures is obtained based on information representing the simpler screen image.

## Description

The present invention relates to an information processing system and, more specifically, to a technique for producing printed material corresponding to an image on the screen of a display device.

In the process of developing an application program, it is necessary to make a specification and a user's guide for that application program. In such a specification and user's guide, various functions of the application program and methods of using it need to be described in detail while actual images to be displayed when the application program operates are reproduced in hard copy form on sheets. In many cases, application programs operating on recent operating systems for personal computers, such as Operating System/2 (trademark of IBM Corp.) and MS-Windows (trademark of Microsoft Corp.), have a unified graphical user interface. This in contrast to the fact that application programs operating on conventional operating systems have a user interface which mainly requires character input. Therefore, in a specification and a user's guide of the above type of application program, a number of pages need to be constituted in a unified and graphical manner.

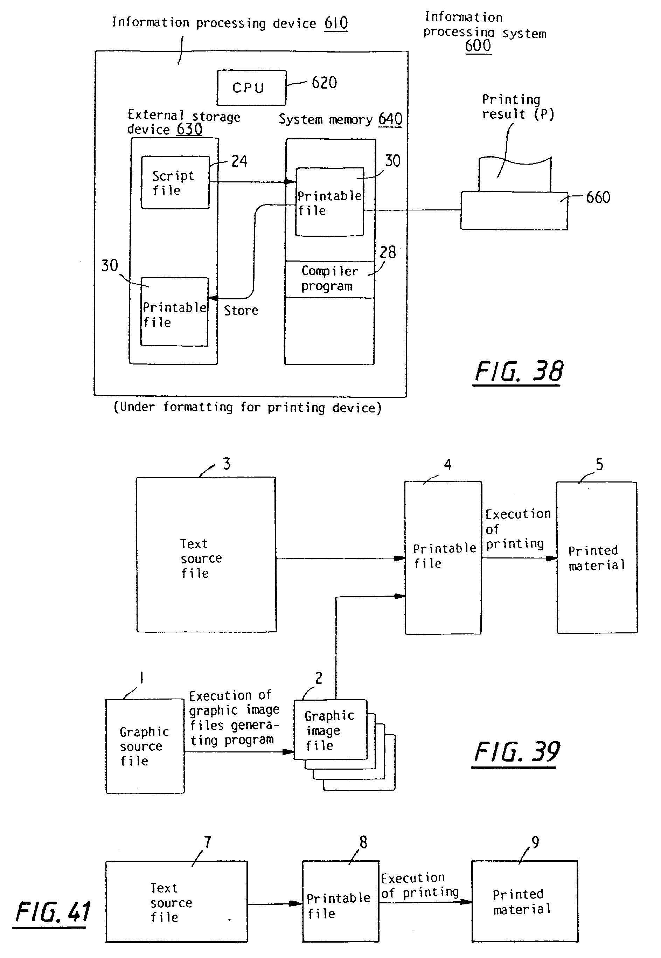

However, for the reasons described below, it has conventionally been difficult to efficiently produce pages including graphical representations. In a first conventional technique, graphic image files of figures and pictures to be used in graphical page configurations are prepared. Figure 39 is a block diagram showing the first conventional technique. In Figure 39, a graphic source file 1 is a file which a user has produced on a host computer such as a personal computer while watching its screen. The graphic source file 1 is converted to graphic image files 2 using a graphic image file generating application program such as PostScript (trademark of Adobe Systems Inc.). Each graphic image file 2 is produced for a single group of figures or pictures. Furthermore, a text source file 3 is produced which has a hook to be used for taking in the graphic image files 2. A printable file 4 is produced from the text source file 3 and the graphic image files 2, and a printed material 5 is produced from the printable file 4.

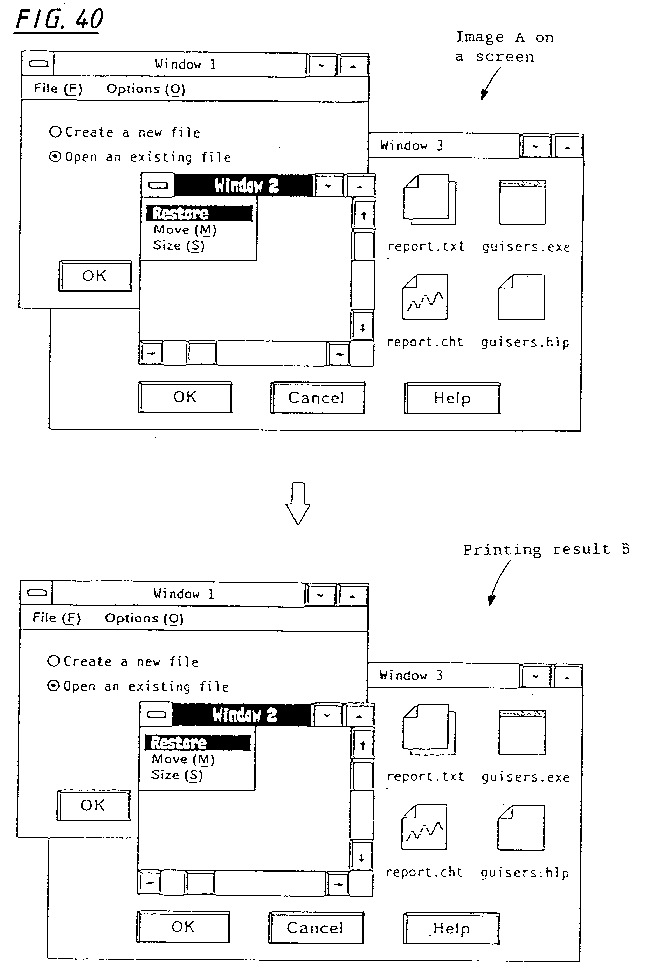

Figure 40 shows a relationship between an image A on a screen of a host computer and a printing result B in the first conventional technique described above. Figure 40 illustrates that, with this prior art technique, if one wants to obtain an elaborate work as a printing result, one needs to produce the same elaborate work on the screen. This technique has the following problems. It takes much labour to produce the screen configuration A that faithfully reproduces figures and pictures that are desired in the printing result B. It is difficult to modify the graphic image files 2 one produced, while the text source file 3 is being edited. Where the printable file 4 has taken in a number of graphic image files 2, printing takes a long time because of the large amount of information to be transferred to a printer. Furthermore, since graphic image files 2 are of dot images and have a large amount of information, a large memory capacity is required to store those files and it is not easy to manage and take custody of those files.

Even if a user watches the graphic source file 1, he cannot know its printing result until printing is actually executed. It is therefore difficult to manage the graphic source file 1. Contents of a user interface of an application program under development are frequently changed, and contents of the graphic image files 2 should also be changed on every such occasion. Thus, it is very difficult to produce a specification and a user's guide for an application program under development.

A second conventional technique is a technique which does not intend to faithfully reproduce on paper actual display images obtained when an application program operates. That is, in the second conventional technique, limited screen configurations and page configurations are produced which can be expressed by a combination of existing character fonts and graphical fonts. Thus, actual display images obtained when an application program operates cannot be reproduced faithfully on paper. With this technique, a rough work produced on the screen will only enable the user to create a rough work as a printing result.

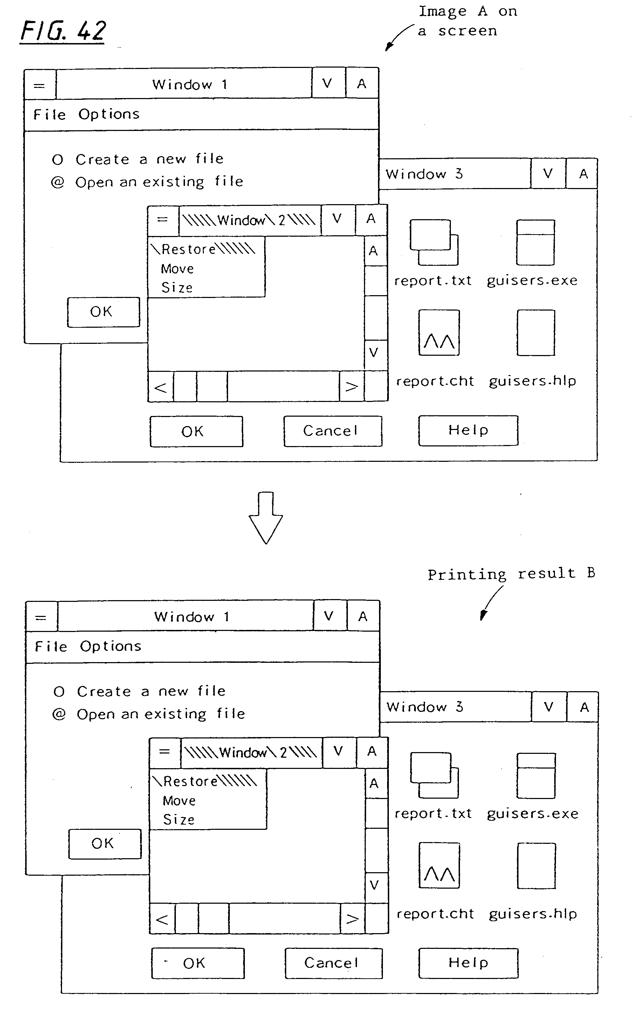

Figure 41 is a block diagram showing the second conventional technique. In Figure 41, a text source file 7 serves to express actual display images obtained when an application program operates in a simplified manner, that is, in a range of images which can be expressed by a combination of existing character fonts and graphical fonts. The text source file 7 is converted to a printable file 8, based on which a printing result 9 is produced.

Figure 42 shows a relationship between a screen configuration A of a host computer and a printing result B in the above-described second conventional technique. According to the second conventional technique, the source file 7 can be produced and modified easily because no graphic image files are generated. However, a resulting specification and user's guide do not work properly, because the figures and pictures that will appear in the actual products are not faithfully reproduced on sheets and a screen. That is to say, complex shapes and images cannot be printed. Furthermore, not expressing contents of actual products sufficiently, a user's guide may not be useful to users and a specification may not be useful for operations of making and evaluating products.

Published Examined Patent Application No. 1-50951 discloses a method of displaying a circular graph and a line graph on a display device while vertically moving character fonts. Furthermore, PUPA No. 62-111360 discloses a method of displaying a figure of an electric part symbol simply by inputting its name, in which preliminarily designed patterns of a plurality of electric part symbols are given their names.

An object of the present invention is to provide a system and a method which can more efficiently produce graphical page configurations, eg. a specification, a user's guide, etc., for an application program having a graphical user interface.

Accordingly the present invention provides a data processing system having a processor, a storage device, a display device, and being connectable to a printing apparatus, the system further comprising visualisation means for generating a screen image on the display device from a screen image file stored in the storage device, and a printing means for sending print information to the printing apparatus based on a print image file stored in the storage device and relating to the screen image file, the system being characterised by: the screen image file representing a screen image which is simpler in form than a printed image created by the printing apparatus from the corresponding print image file; and generation means for creating the print image file from the screen image file with reference to a translation means in the storage device relating elements in the screen image file with specific printing elements to be included in the print image file.

According to the present invention, while an image associated with a printing result, but simpler in constitution than the printing result, is produced on a screen, for instance, by using image fonts such as character fonts and graphic fonts, a printing result including more finely detailed figures and pictures is obtained in printing based on the above screen information.

In a screen information printing method according to the invention, a source file is generated which serves to produce a simulation image for simulating a printing result on a display device by a combination of a plurality of image fonts. Based on the source file, a printable file to be used for producing the printing result is generated.

Viewed from a second aspect the present invention provides a method of printing screen information in a data processing system having a processor, a storage device, a display device, and being connectable to a printing apparatus, the method comprising the steps of generating a screen image on the display device from a screen image file stored in the storage device, and sending print information to the printing apparatus based on a print image file stored in the storage device and relating to the screen image file, the method being characterised by the steps of: representing a screen image in the screen image file which is simpler in form than a printed image to be created by the printing apparatus from the corresponding print image file; and employing generation means to create the print image file from the screen image file with reference to a translation means in the storage device relating elements in the screen image file with specific printing elements to be included in the print image file.

The method of the present invention allows printing of complex figures based on a simplified figure written in a source file etc, by, for instance, combining existing printing fonts.

The present invention will be described further, by way of example only, with reference to a preferred embodiment thereof as illustrated in the accompanying drawings, in which:
Figure 1 is a block diagram showing the constitution of an embodiment of an image information printing method according to the present invention;
Figure 2 is a view showing an image S on a screen of a display device and a printing result P in the embodiment;
Figure 3 shows a relationship in the embodiment among a configuration of a simplified figure for a window expand icon (as one of the simplified figures of the image S), description contents of a module of a script file that is generated based on the above simplified figure, and a configuration of a window expand icon as one of fine figures of the printing result P that is generated based on the above module;
Figure 4 is an enlarged view showing a detailed configuration of the simplified figure for the window expand icon;
Figure 5 is an enlarged view showing a detailed configuration of the window expand icon;
Figure 6 is an enlarged view showing in detail by what combination of printing fonts a top-left portion of the window expand icon is formed;
Figure 7 is an enlarged view showing in detail by what combination of printing fonts a top-right portion of the window expand icon is formed;
Figure 8 is an enlarged view showing in detail by what combination of printing fonts a middle-left portion of the window expand icon is formed;
Figure 9 is an enlarged view showing in detail by what combination of printing fonts a middle-right portion of the window expand icon is formed;
Figure 10 is an enlarged view showing in detail by what combination of printing fonts a bottom-left portion of the window expand icon is formed;
Figure 11 is an enlarged view showing in detail by what combination of printing fonts a bottom-right portion of the window expand icon is formed;
Figure 12 is an enlarged view showing a first step of printing the window expand icon;
Figure 13 is an enlarged view showing a second step of printing the window expand icon;
Figure 14 is an enlarged view showing a third step of printing tile window expand icon;
Figure 15 is an enlarged view showing a fourth step of printing the window expand icon;
Figure 16 is an enlarged view showing a fifth step of printing the window expand icon;
Figure 17 is an enlarged view showing a sixth step of printing the window expand icon;
Figure 18 is an enlarged view showing a seventh step of printing the window expand icon;
Figure 19 is an enlarged view showing a eighth step of printing the window expand icon;
Figure 20 is an enlarged view showing a ninth step of printing the window expand icon;
Figure 21 is an enlarged view showing a 10th step of printing the window expand icon;
Figure 22 is an enlarged view showing an 11th step of printing the window expand icon;
Figure 23 is an enlarged view showing a 12th step of printing the window expand icon;
Figure 24 is an enlarged view showing a 13th step of printing the window expand icon;
Figure 25 is an enlarged view showing a 14th step of printing the window expand icon;
Figure 26 is an enlarged view showing a 15th step of printing the window expand icon;
Figure 27 is an enlarged view showing a detailed configuration of the simplified figure for the system menu icon of the preferred embodiment;
Figure 28 is an enlarged view showing a detailed configuration of the system menu icon (printing result) of the embodiment;
Figure 29 is an enlarged view showing in detail by what combination of printing fonts a central portion of the system menu icon is formed;
Figure 30 is a table showing a correspondence relationship between macro names and macro programs in the embodiment;
Figure 31 is a table showing a correspondence relationship between key words relating to icons of symbolic figures and macro names in the embodiment;
Figure 32 is a table showing correspondence relationships between key words relating to icons other than the icons of symbolic figures and macro names in the embodiment;
Figure 33 is a flowchart showing in detail the execution content of the conversion technique used in the preferred embodiment;
Figure 34 is a table showing a correspondence relationship between simplified figures on a screen and fine figures in printing results in the embodiment;
Figure 35 is a view showing a correspondence relationship between simplified figures on a screen and a printing result in an embodiment other than that shown in Figure 2;
Figure 36 is a block diagram showing the constitution of an information processing system of the preferred embodiment when a text source file is being generated;
Figure 37 is a block diagram showing the constitution of the information processing system of the preferred embodiment when a conversion program is being executed;
Figure 38 is a block diagram showing the constitution of the information processing system of the embodiment when a script file is being formatted for a printing device;
Figure 39 is a block diagram showing the constitution of a first conventional prior art method for printing screen information;
Figure 40 is a view showing a relationship between screen information and a printing result in the first conventional prior art method;
Figure 41 is a block diagram showing the constitution of a second conventional prior art method for printing screen information; and
Figure 42 is a view showing a relationship between screen information and a printing result in the second conventional prior art method.

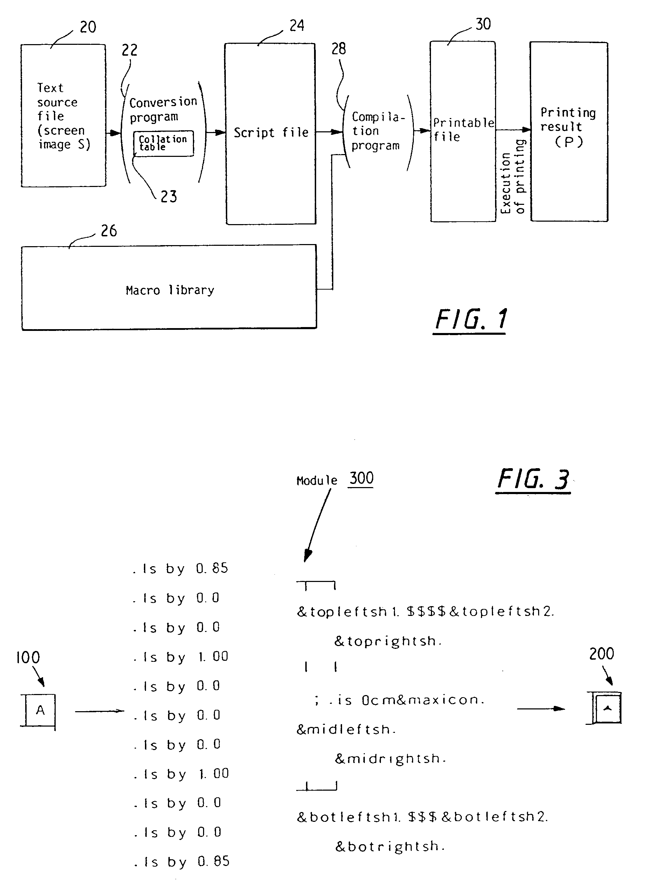

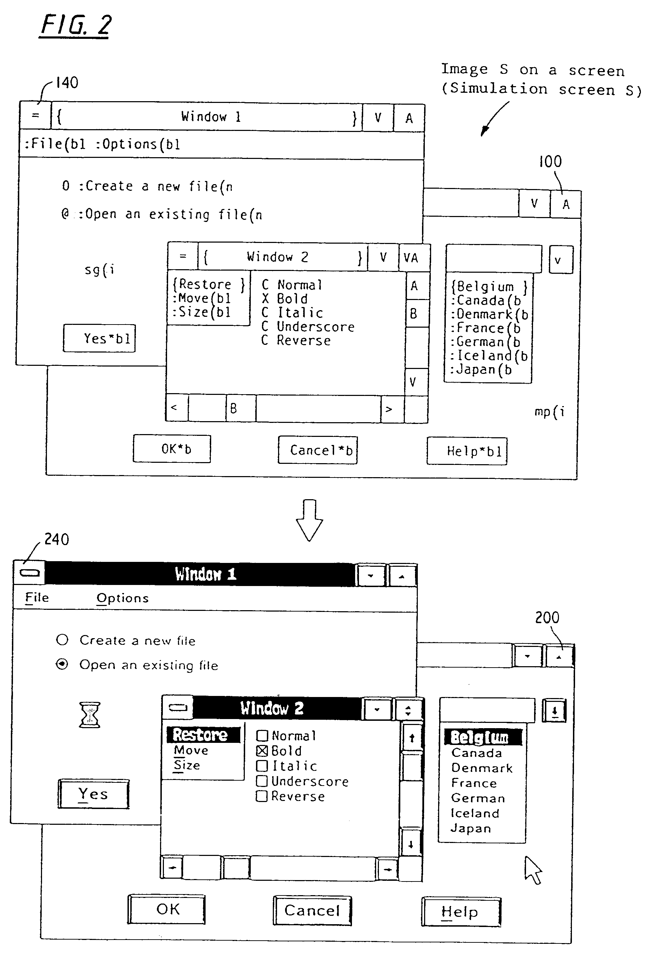

Figure 1 is a block diagram showing the processing flow of a screen information printing method according to a preferred embodiment of the present invention. Figure 2 shows an image S on a screen and a printing result P in this embodiment. In Figure 1, a text source file 20 as screen information is described by image fonts called character fonts and graphic fonts. The description by the image fonts means a description by use of codes that designate particular image fonts. The image S is displayed on the screen of a display device based on the text source file 20. In Figure 2, the image S has figures simple in constitution generated by a combination of a plurality of image fonts, and has contents that cause an association with the printing result P. That is, the image S of the simple figures simulates the printing result P of fine figures.

The text source file 20 is converted to a script file 24 as an intermediate file by a conversion program 22 as a conversion means. The conversion program 22 includes a collation table 23 of key words vs. macro names. When finding a particular key word in the text source file 20, the conversion program 22 replaces that key word with a related macro name by referring to the collation table 23. The script file 24 is produced such that a figure of each particular unit in the text source file 20 is converted to a combination of a single or a plurality of printing fonts to be used for producing a printing result corresponding to that figure, commands relating to control of printing positions, and a single or a plurality of macro names. A macro name is a kind of name related to a macro program to call it, in which the macro program serves to produce a particular printing result and is a combination of a single or a plurality of printing fonts and commands relating to the control of printing positions.

A variety of macro programs are stored in a macro library 26. Each macro program is a program for producing a printing result of a particular, realistic, and fine figure by performing a printing operation by use of a single or a plurality of existing printing fonts while controlling printing positions in a variety of manners. A compiler 28 as a printable file generation means generates a printable file 30 based on the script file 24 while replacing macro names in the script file 24 with corresponding macro programs in the macro library 26. The printable file 30 includes printing control commands that are in accordance with a type of printing device, and the printing device outputs the printing result P based on the printable file 30.

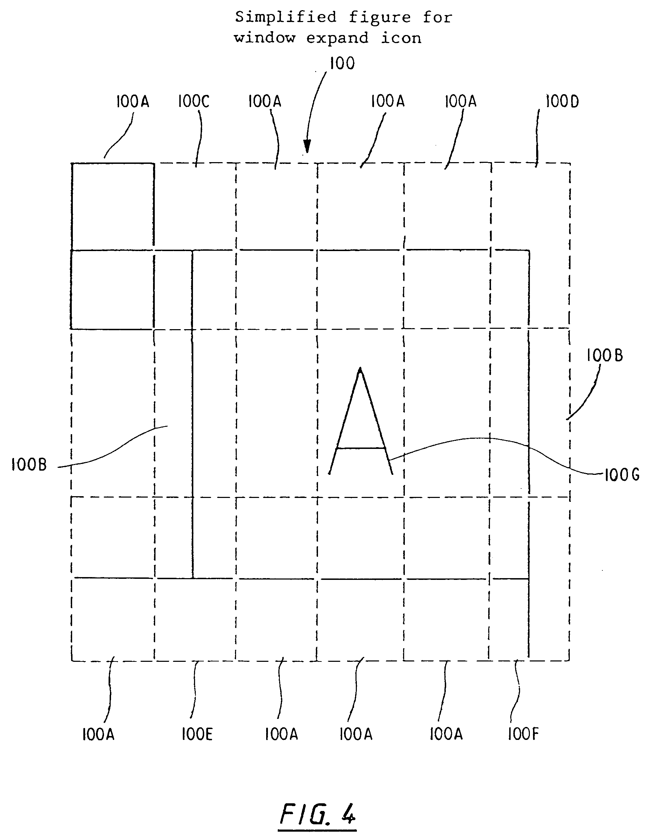

Figure 3 shows a window expand, simplified figure 100 in the screen window S (see Figure 2) and a window enlarging icon 200 in the printing result P (see Figure 2) that is produced based on the window expand, simplified figure 100. The window enlarging icon 200 serves to enlarge a window 210. The window expand simplified figure 100 is combined with an image font, and has a configuration for causing an association with the window enlarged icon 200. In other words, the window expand simplified figure 100 simulates the window expand icon 200. An operator can obtain the fine, realistic window expand icon 200 in the printing result P from the window expand simplified figure 100 by combining it with an existing image font.

Figure 3 also shows a part (module) 300 of the script file 24 generated by converting the window expand simplified figure 100 using the conversion program 22. In Figure 3, ".ls" is an instruction "line spacing" that relates to the control of a printing position, and specifies a printing position in the vertical direction. That is, ".ls" designates a line feed. A symbol ".ls by 0.85" is an instruction to feed a printing position in the vertical direction by a length of 85% of the preset vertical width of one line. Since ".ls by 0.85" is written at the first line of the module 300, a printing result form (window expand icon 200) produced by the module 300 is spaced by 0.85 line from a form located above. The symbol ".ls by 0.00" is an instruction to feed a printing position by a length of 0% of the preset vertical width of one line. That is, ".ls by 0.00" is an instruction to print without changing the vertical printing position.

In the case of using a single printing font or using a simple combination of a plurality of printing fonts by arranging those in a horizontal direction without changing their vertical printing positions, the single or plurality of printing fonts are described in the module 300 as they are. Examples of printing fonts described in the module 300 are " 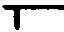 ", "| |" and " 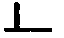 ".

Nine macro names of "&topleftsh1.", "&topleftsh2.", "&toprightsh.", "&maxicon.", "&midleftsh.", "midrightsh.", "&botleftsh1.", "&botleftsh2." and "&hotrightsh." are used in the module 300. These and the other macro names and macro programs called by the respective macro names are stored in the macro library 26 of Figure 1.

Figure 4 shows the window enlarged simplified figure 100 in an enlarged manner. It is seen from Figure 4 that the window enlarged simplified figure 100 is a combination of eight image fonts "-" (100A), two image fonts "|" (100B), one image font " 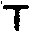 " (100C), one image font " 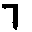 " (100D), one image font " 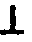 " (100E), one image font " 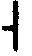 " (100F) and one image font "A" (100G). All of these image fonts are prepared in an ordinary font set and can be used quite easily.

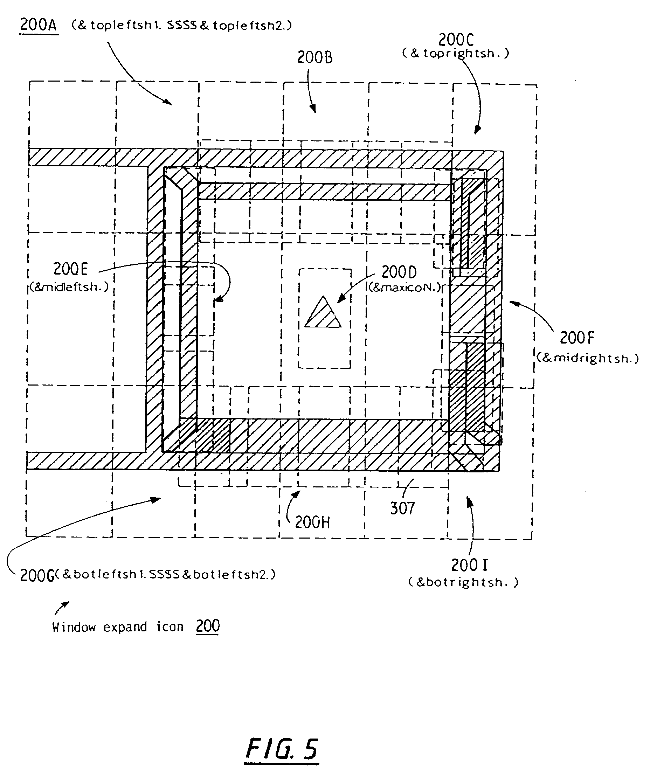

Figure 5 shows the window enlarged icon 200 in an enlarged manner. In Figure 5, a top-left portion 200A of the window enlarged icon 200 is mainly formed by a macro program designated by a macro name "&topleftsh1.$$$$&topleftsh2.". The "$$$$", which follows "&topleftsh1." contributes to the formation of the top-middle portions 200B that are part of the top-right portion 200A. The macro name "&topleftsh2." relates to a macro program for restoring the kind of font set, which is now designated by "&topleftsh1.", to the state before the designation and restoring the printing position (font base line), which is now designated also by "&topleftsh1.", to the state before the designation. The top-right corner portion 200C is formed by a macro program designated by the macro name "&toprightsh.".

A triangle 200D having an apex directed upward and located at the centre of the window enlarging icon 200 is formed by a macro program designated by the macro name "&maxicon.". A vertical line portion 200E, i.e., a middle-left portion of the window enlarging icon 200, which is not shaded, is formed by a macro program designated by the macro name "&midleftsh.". A vertical line portion 200F, i.e., a right-side portion of the window enlarging icon 200, which is shaded, is formed by a macro program designated by the macro name "&midrightsh.".

A bottom-left portion 200G of the window enlarging icon 200 is formed by a macro program designated by a macro name "&botleftsh1.$$$$&botleftsh2.". "$$$$" contributes to formation of bottom-middle portions 200H that are part of the bottom-left portion 200G. The macro name "&botleftsh2." relates to a macro program for restoring the kind of font set, which is now designated by "&botleftsh1.", to the state prior to the designation and restoring the printing position (font base line), which is now designated also by "&botleftsh1.", to the state prior to the designation.

A bottom-right corner portion 200I of the window expand icon 200 is formed by a macro program designated by the macro name "&botrightsh.". It is noted that the above respective portions of the window expand icon 200 are actually formed when the printing is performed after the macro names are replaced by the corresponding macro programs by use of the macro library 26 and then converted to the printable file 30 by the compiler 28.

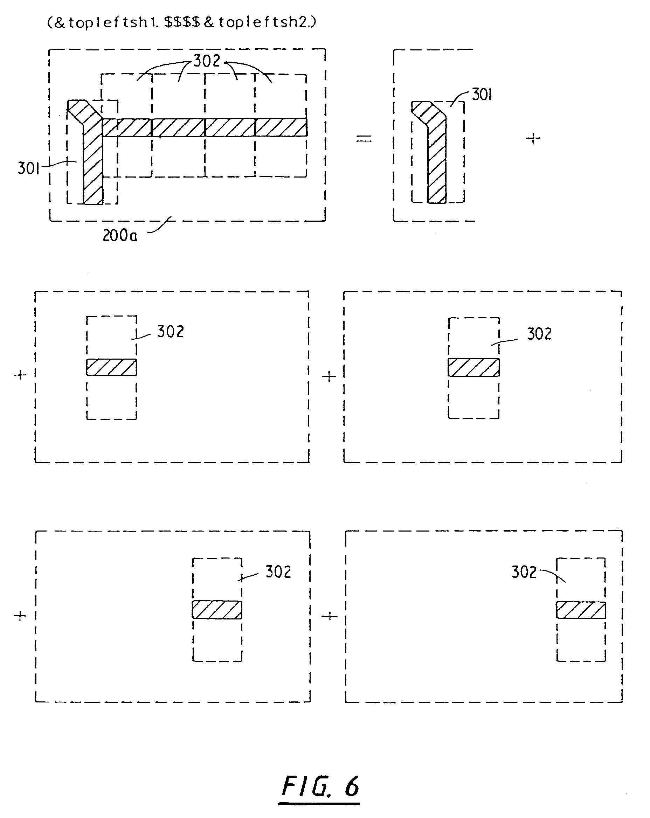

Figure 6 illustrates how the macro program called by the macro name "&topleftsh1.$$$$topleftsh2." is executed. Figure 6 also shows by what combination of printing fonts the main portion 200a of the top-left portion 200A of the window expand icon 200 is formed. The portion 200a is obtained by removing the printing font portion " 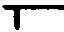 of the second line (the line located between ".ls by 0.85" and ".ls by 0.0") of the module 300 of Figure 3 from the top-left portion 200A. As shown in Figure 6, the portion 200a is formed as a combination of a single first printing font 301 having a shape of letter Y with a missing portion and four second printing fonts 302 each having a shape similar to a minus sign. The four second printing fonts 302 are arranged in line in the horizontal direction to form a continuous line. The first printing font 301 and the second printing fonts 302 are vertically deviated from each other. The leftmost one of the four second printing fonts 302 and the first printing font are also overlapped with each other in printing position.

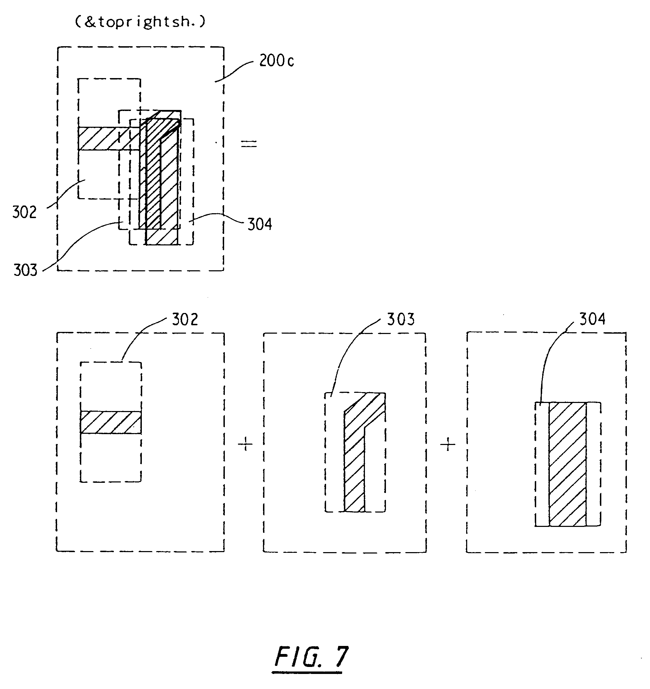

Figure 7 illustrates how the macro program called by the macro name "&toprightsh." is executed. Figure 7 also shows by what combination of printing fonts the main portion 200c of the top-right portion 200C of the window expand icon 200 is formed. The portion 200c is obtained by removing the printing font portion " 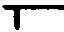 " of the second line (the line located between ".ls by 0.85" and ".ls by 0.0") of the module 300 of Figure 3 from the top-right portion 200C. As shown in Figure 7, the portion 200c is formed as a combination of a single second printing font 302, a single third printing font 303 having a shape of a letter Y with a missing portion, and a single fourth printing font 304 like a wide vertical bar. These three kinds of printing fonts 302, 303, and 304 are vertically deviated from each other, and are overlapped with each other in the printing position.

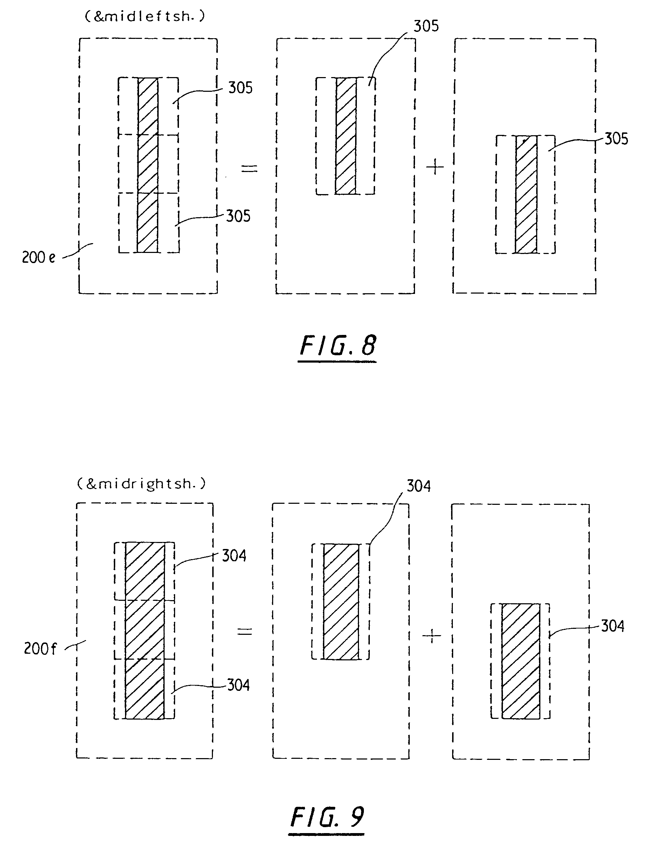

Figure 8 illustrates how the macro program called by the macro name "&midleftsh." Figure 8 also shows by what combination of printing fonts the main portion 200e of the left-side portion 200E of the window expand icon 200 is formed. The portion 200e is obtained by removing the printing font portion "| |" of the eighth line (the line located between ".ls by 1.00" and ".ls by 0.0") of the module 300 of Figure 3 from the left-side portion 200E. As shown in Figure 8, the portion 200e is formed by combining two fifth printing fonts 305 each like a vertical bar that is not very wide such that they are deviated from each other only in the vertical direction and overlapped with each other in printing position.

Figure 9 graphically illustrates the execution contents the macro program called by the macro name "&midrightsh.". In other words, Figure 9 shows by what combination of printing fonts the main portion 200f of the right-side portion 200F of the window enlarging icon 200 is formed. The portion 200f is obtained by removing the printing font portion "| |" of the eighth line (the line located between ".ls by 1.00" and ".ls by 0.0") of the module 300 of Figure 3 from the right-side portion 200F. As shown in Figure 9, the portion 200f is formed by combining two fourth printing fonts 304, each in the form of a thick vertical bar, such that they are deviated from each other only in the vertical direction and overlapped with each other in printing position.

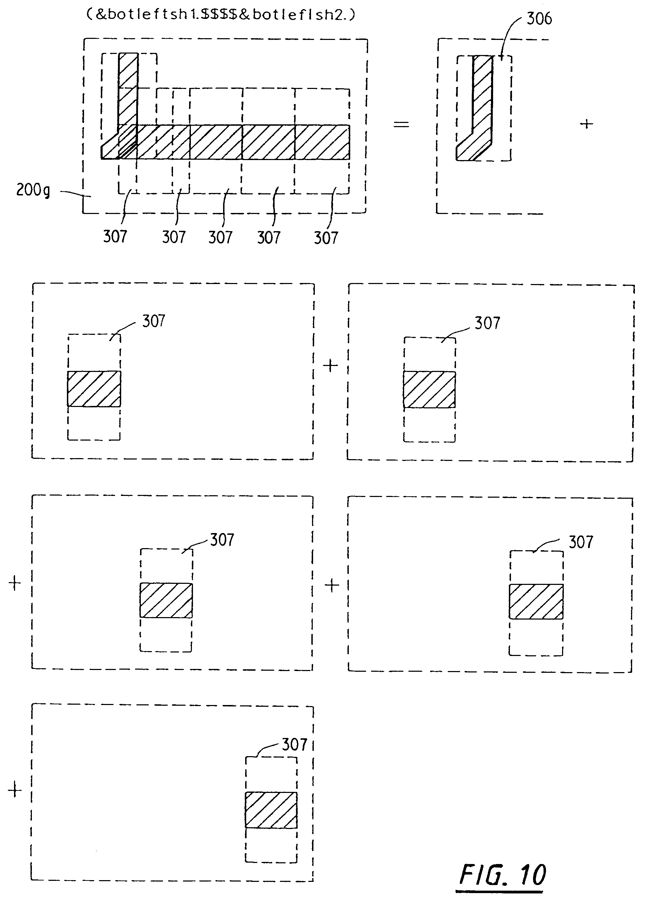

Figure 10 graphically illustrates the execution contents the macro program called by the macro name "&botleftsh1.$$$$&botleftsh2.". In other words, Figure 10 shows by what combination of printing fonts the main portion 200g of the bottom-left portion 200G of the window expand icon 200 is formed. The portion 200g is obtained by removing the printing font portion " 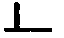 " of the 16th line (the line located between ".ls by 1.00" and ".ls by 0.0") of the module 300 of Figure 3 from the bottom-left portion 200G. As shown in Figure 10, the portion 200g is a combination of a single sixth printing font 306 having a shape obtained by rotating the third printing font 303 by 180⁰ (i.e., making it upside-down) and five seventh printing fonts 307 each having a shape similar to a thick minus sign. The five seventh printing fonts 307 are horizontally arranged so as to form a continuous line. The sixth printing font 306 and the seventh printing fonts 307 are vertically deviated from each other in printing position. The leftmost one and the second leftmost one of the five seventh printing fonts 307 and the sixth printing font 306 are overlapped with each other in printing position.

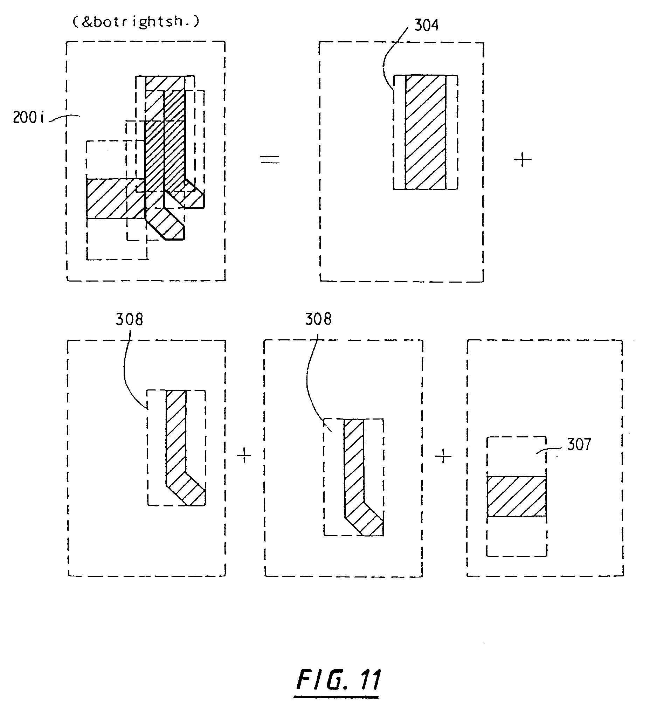

Figure 11 graphically illustrates the execution contents of the macro program called by the macro name "&botrightsh.". In other words, Figure 11 shows by what combination of printing fonts the main portion 200i of the bottom-right portion 200I of the window expand portion 200 is formed. The portion 200i is obtained by removing the printing font portion " 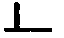 " of the 16th line (the line located between ".ls by 1.00" and ".ls by 0.0") of the module 300 of Figure 3 from the bottom-right portion 200I. As shown in Figure 11, the portion 200i is a combination of a single fourth printing font 304, two eighth printing fonts 308, each having a shape obtained by rotating the first printing font 301 by 180⁰ (i.e., making it upside-down), and a single seventh printing font 307. The three kinds of printing fonts 304, 308, and 307 are deviated from each other in printing position in both of the vertical and horizontal directions. Part of these printing fonts are overlapped with each other in printing position.

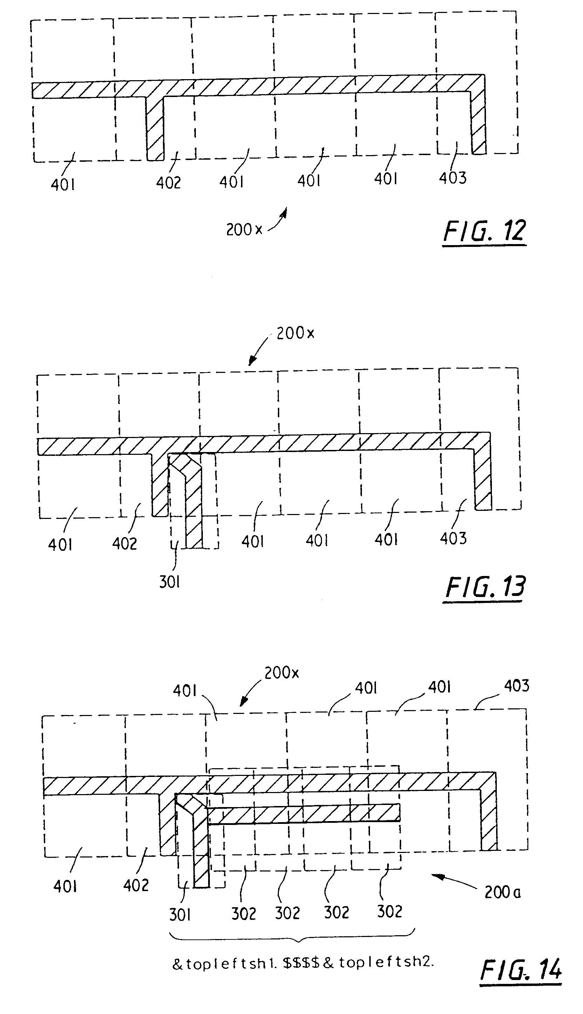

Being existent, all of the eight kinds of printing fonts 301-308 shown in Figs. 6-11 can be obtained and used very easily. It is assumed that the eight kinds of printing fonts 301-308 belong to the same font set (i.e., second font set). It is also assumed that the six kinds of printing fonts 401-406 described below in connection with Figs. 12-26 belong to the same font set (first font set), which is different from the above-mentioned second font set.

Figs. 12-26 show in a sequential manner how the window enlarging icon 200 is formed. Figure 12 shows a top edge 200X of the window enlarging icon 200. The top edge 200X is formed by execution of the second line description of the module 300. The top edge 200X is a combination of four first printing fonts "-" (401), a single second printing font " 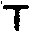 " (402), and a single third printing font " 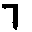 " (403). These printing fonts 401-403 are neither overlapped with each other in printing position nor deviated from each other in the vertical or horizontal direction in a particular manner. That is, they are printed according to an ordinary printing procedure.

Figure 13 shows a state in which the first printing font 301 of the second font set is printed (superimposed) on a part of the top edge 200X. Figure 14 shows a state in which the four second printing fonts 302 of the second font set (i.e., the portion 200a of Figure 6) are printed (superimposed) on a part of the top edge 200X. That is, this state is obtained after execution of the macro program relating to the macro name "&topleftsh1.$$$$&topleftsh2.".

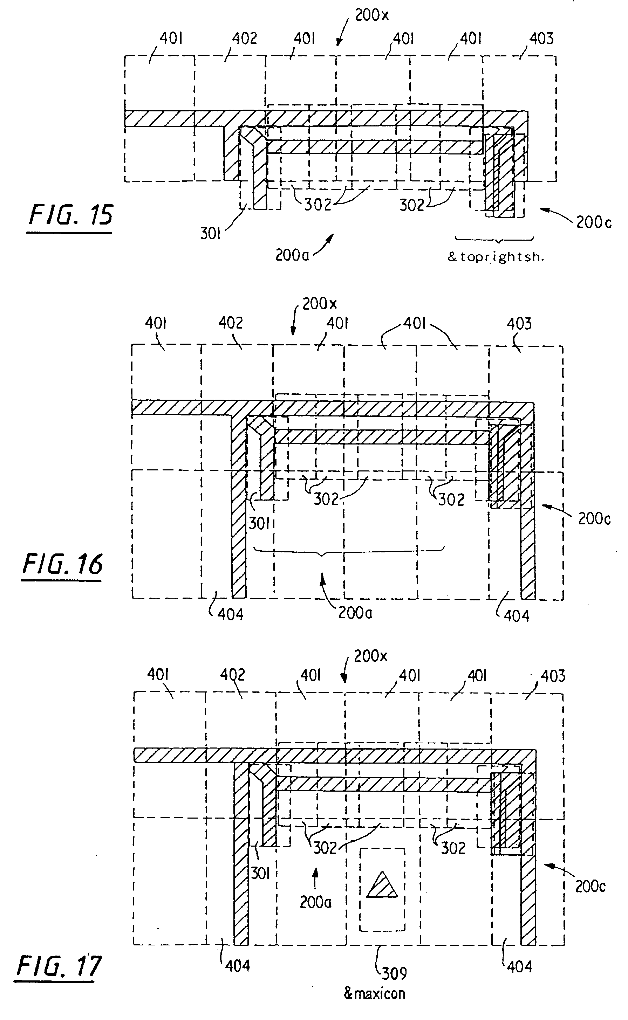

Figure 15 shows a state in which the portion 200c of Figure 7 is printed (superimposed) on a part of the top edge 200X. This state is obtained after execution of the macro program relating to the macro name "&toprightsh.". Figure 16 shows a state obtained after execution of the eighth line description of the module 300. In Figure 16, the two printing fonts "|" (404) of the first font set are arranged so as to be apart from each other by three printing spaces.

Figure 17 shows a state obtained after execution of the macro program relating to the macro name "&maxicon." of the module 300. By the execution of the macro program relating to the macro name "&maxicon.", the ninth printing font 309 belonging to the second font set is formed at the centre of the icon 200. The description ";.is 0cm" (see figure 3) is an instruction to avoid horizontal deviation of the printing position.

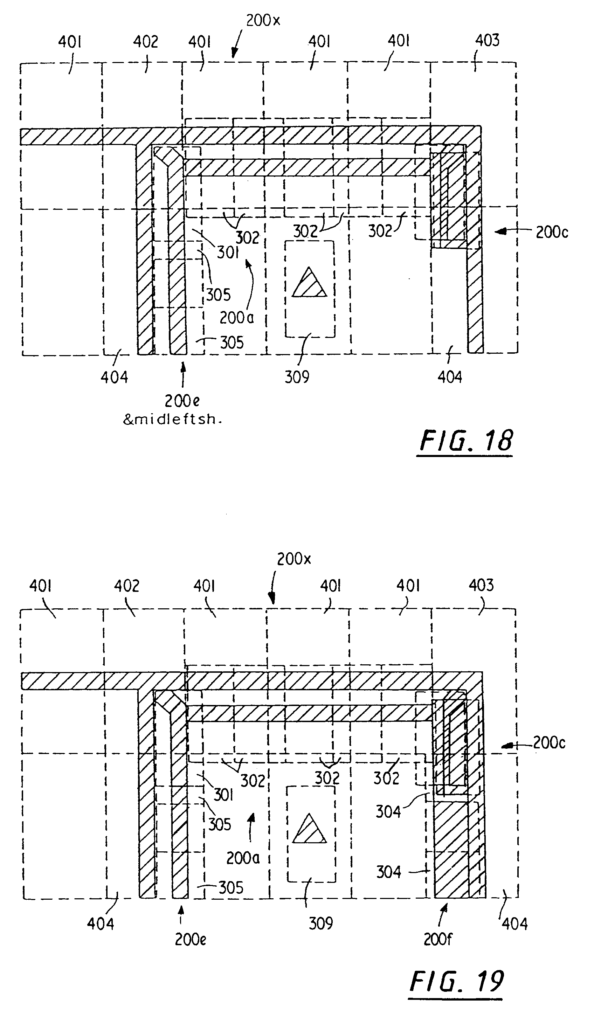

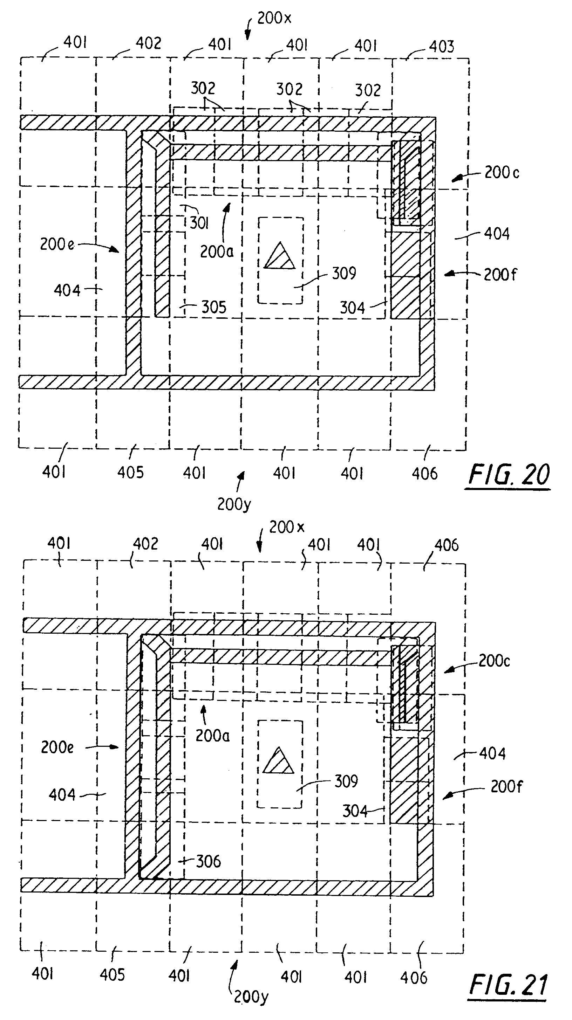

Figure 18 shows a state in which the portion 200e is formed by execution of the macro program relating to the macro name "&midleftsh." Figure 19 shows a state in which the portion the portion 200f is formed by execution of the macro program relating to the macro name "&midrightsh." Figure 20 shows a state in which a bottom edge 200Y is formed that is a combination of the four first printing fonts "-" (401), one fifth printing font " 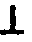 " (405) and one sixth printing font " 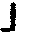 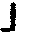 " (406) all belonging to the first font set.

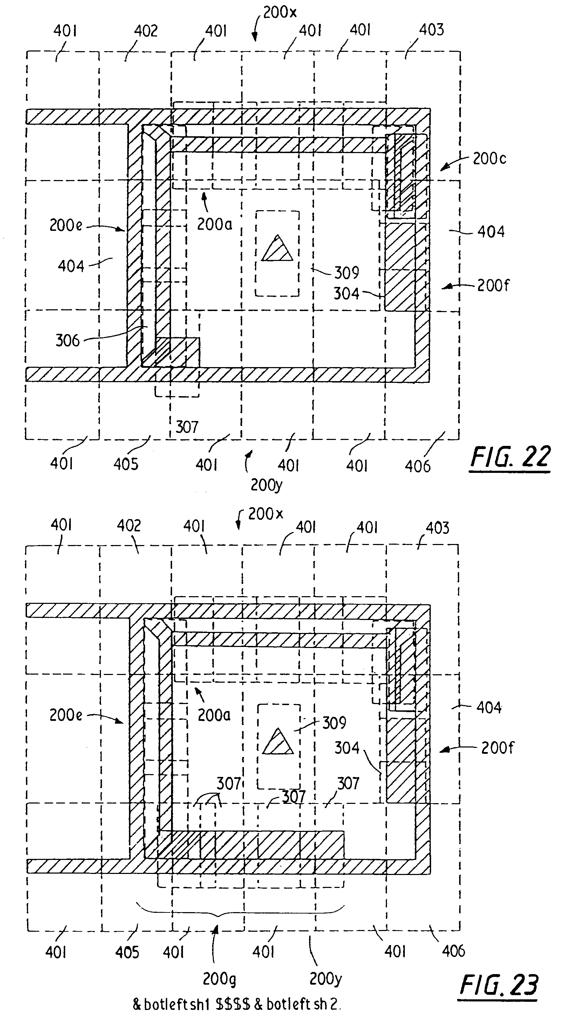

Figure 21 shows a state in which the sixth printing font 306 of the second font set is printed (superimposed) on a part of the bottom edge 200Y. Figure 22 shows a state in which one seventh printing font 307 of the second font set is printed (superimposed) on a part of the bottom edge 200Y. Figure 23 shows a state in which four seventh printing fonts 307 (i.e., the portion 200g of Figure 10) of the second font set are printed (superimposed) on a part of the bottom edge 200Y. That is, this state is obtained after execution of the macro program relating to the macro name "&botleftsh1.$$$$&botleftsh2.".

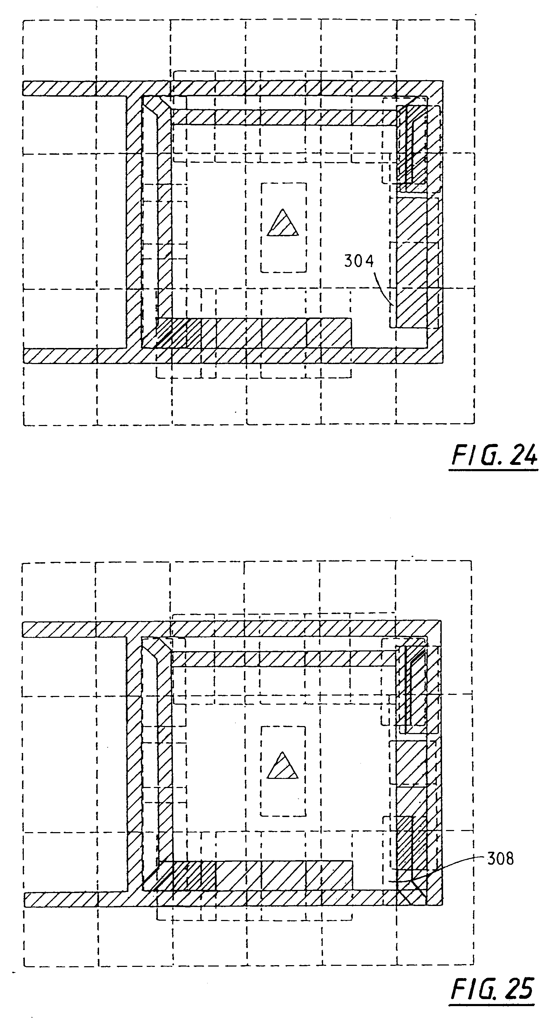

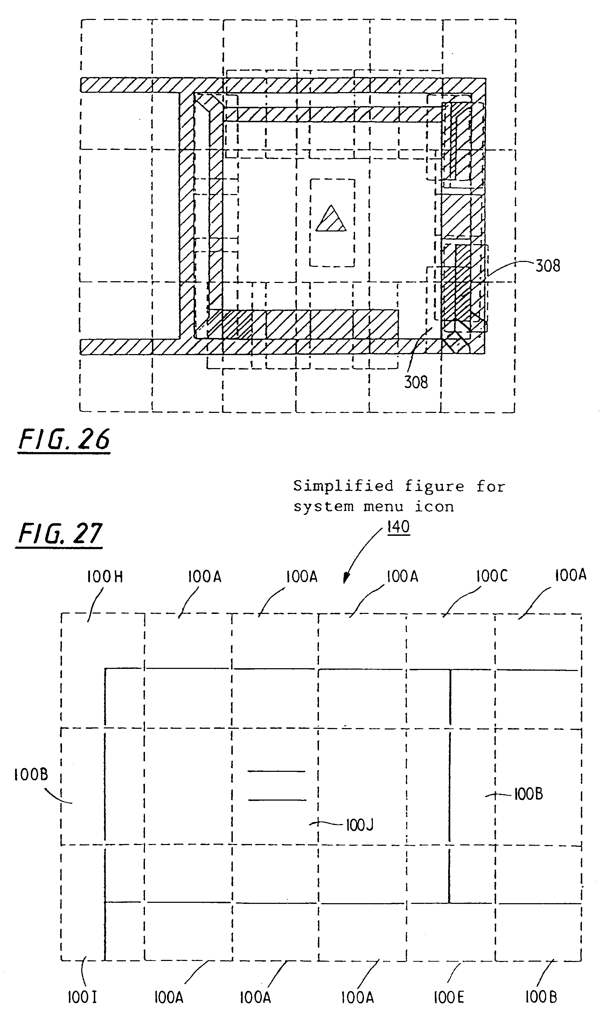

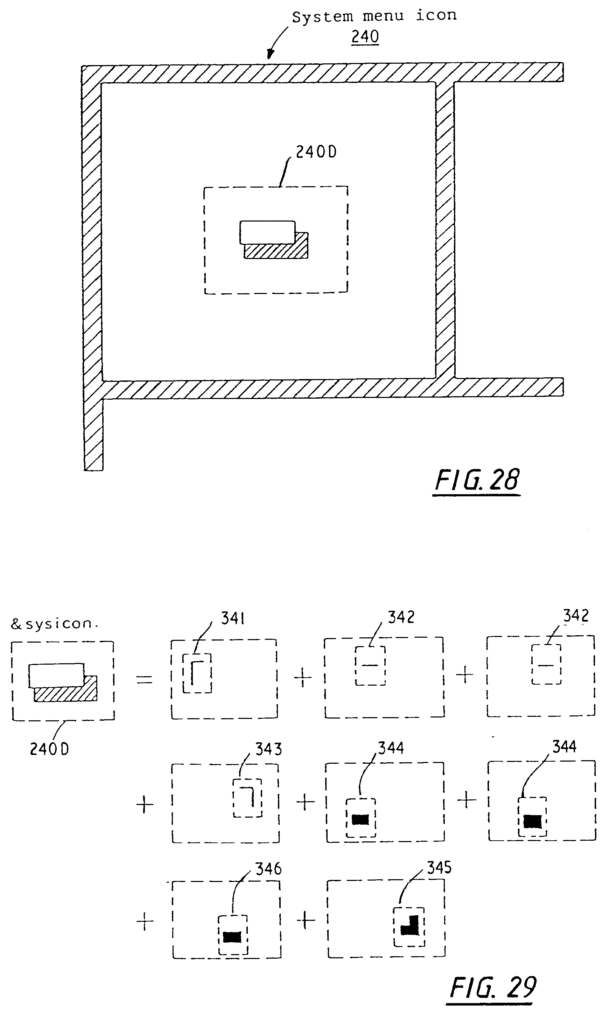

Figure 24 shows a state in which the fourth printing font 304 of the second font set is printed (superimposed) on a part of the bottom edge 200Y. Figure 25 shows a state in which the eighth printing font 308 of the second font set is further printed (superimposed) on the part of the bottom edge 200Y. Figure 26 shows a state in which the eighth printing font 308 of the second font set is further printed (superimposed) on the part of the bottom edge 200Y with a deviation in printing position. Then, the seventh printing font 307 of the second font set is further printed (superimposed) to complete the window enlarging icon 200 as shown in Figure 5.

Next, a system menu icon 240 will be described as a second example different to the window expand icon 200. Figure 27 shows, in an enlarged manner, a simplified figure 140 for the system menu icon. It is seen from Figure 27 that the simplified figure for the system menu icon is a combination of eight image fonts "-" (100A), two image fonts "|" (100B), one image font " 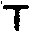 " (100C), one image font " 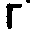 " (100H), one image font " 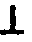 " (100E), one image font " 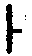 " (100I) and one image font "=" (100J). Being prepared in an ordinary image font set, all of these image fonts can be used quite easily.

Figure 28 shows the system menu icon 240 in an enlarged manner. As to the system menu icon 240, a description will be made of only a central portion 240D. Figure 29 illustrates how the central portion 240D is formed using what combination of printing fonts. As shown in Figure 29, the figure of the central portion 240D is completed by combining five kinds of existing printing fonts 341-345 while specifying their printing positions. A macro name relating to a macro program to effect such a printing operation is "&sysicon.".

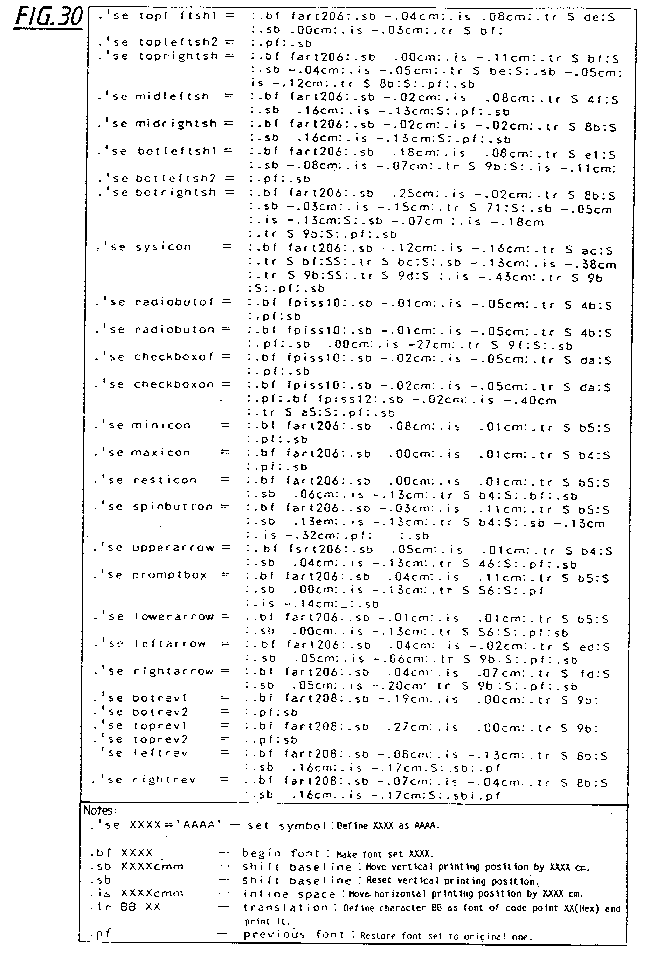

Figure 30 shows a description of a printing operation effected by macro programs relating to 28 kinds of macro names, including the nine kinds of macro names mentioned above. The main function of the conversion program 22 is to generate the script file 24 when necessary by replacing respective parts of the text source file 20 with the above macro names. When finding a key word in the text source file 20, the conversion program 22 replaces, in some cases, the key word with a macro name corresponding to the key word. The key word vs. macro name collation table 23 is referred to by the conversion program 22 itself during such a replacement operation.

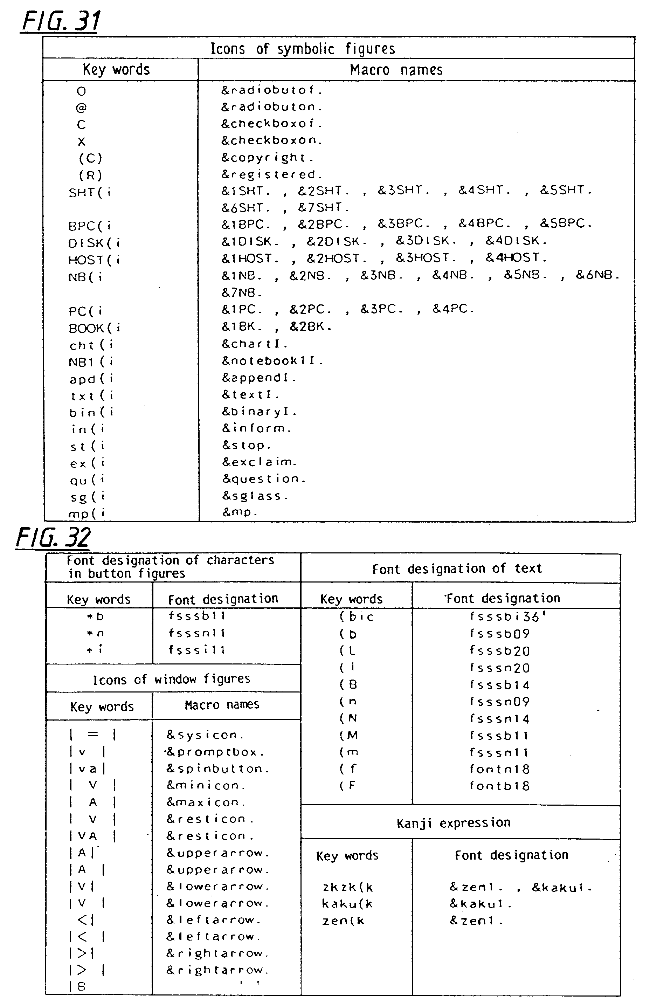

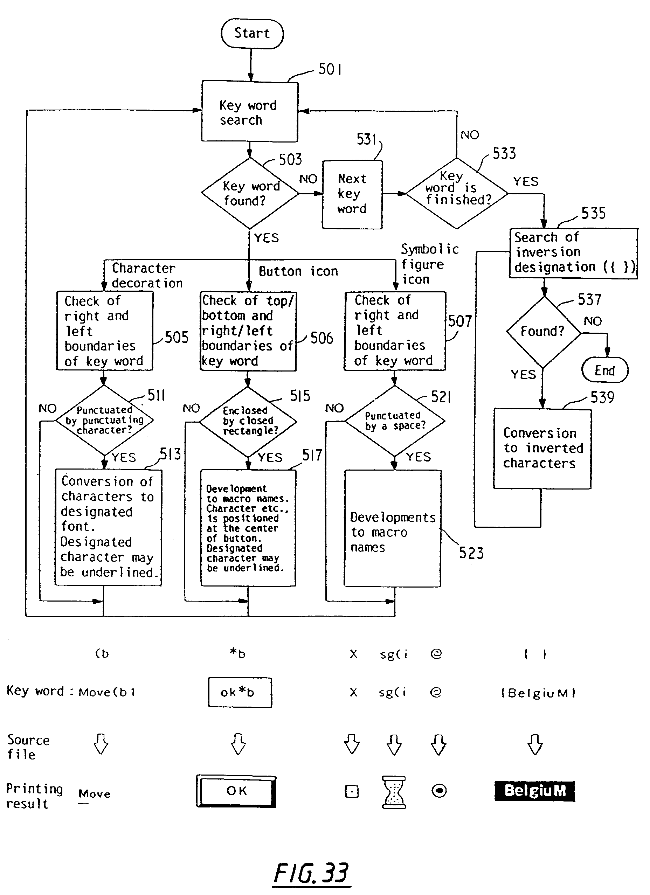

Figures. 31 and 32 shows contents of the key word vs. macro name collation table 23. As will be described later in connection with Figure 33, the occurrence of the replacement of a particular part of the text source file 20 with a particular macro name is not limited to the case where a key word included in Figs. 31 and 32 is found. But the replacement with a macro name may also occurs for a particular combination of particular fonts; for example, when existence of fonts "|" on both sides of "A" is found.

Figure 33 shows the processing procedure of the conversion program 22. In a processing block 501 of Figure 33, a search is sequentially performed to find any of the key words listed in Figs. 31 and 32 in the text source file 20. If it is judged in a judgment block 503 that a certain key word has been found, the right and left boundaries of the key word thus found are checked in a processing block 505, its top/bottom and right/left boundaries are checked in a processing block 506, and its right and left boundaries are checked in a processing block 507.

After the right and left boundaries of the key word are checked in the processing block 505, it is judged in a judgment block 511 whether the key word is punctuated by a punctuating character such as a colon (:). If the judgment is affirmative, in a processing block 513 characters are converted a designated font and, when necessary, an underline is applied to a designated character. For example, in the case of ":Move (b1", since "Move" is interposed between ":" and "(b", "Move" is converted to bold characters. Further, since "1" follows "b", the first character "M" of "Move" is underlined. If the key word is not punctuated by a punctuating character, the process returns to the processing block 501.

After the top/bottom and right/left boundaries of the key word are checked in the processing block 506, it is judged in the judgment block 515 whether the key word is enclosed in a closed rectangle. If the judgment is affirmative, in a processing block 517 a rectangular enclosing the key word is developed to macro names and, when necessary, a symbol or a character is moved to the centre of the rectangle and a designated character is underlined. If the key word is not enclosed by a closed rectangle, the process returns to the processing block 501.

After the right and left boundaries of the key word are checked in the processing block 507, it is judged in a judgment block 521 whether the key word is punctuated by a space. If the judgment is affirmative, the key word is converted in a processing step 523 to a macro name or developed to a plurality of macro names. If the judgment is negative, the process returns to the processing block 501.

If it is judged in the judgment block 503 that a particular key word is no longer found in the text source file 20, the process passes a processing block 531 to perform the same operation for the next key word. If it is judged in a judgment block 533 that all the key words have been subjected to the above operation, the process goes to a processing block 535. In the processing block 535, characters ({}) for designating a display area of black/white inversion are searched. If it is judged in a judgment block 537 that inversion designating characters have been found, an operation necessary to print characters in the designated area in an inverted manner is performed in a processing block 539. If the inversion designating characters are no longer found, the process is ended.

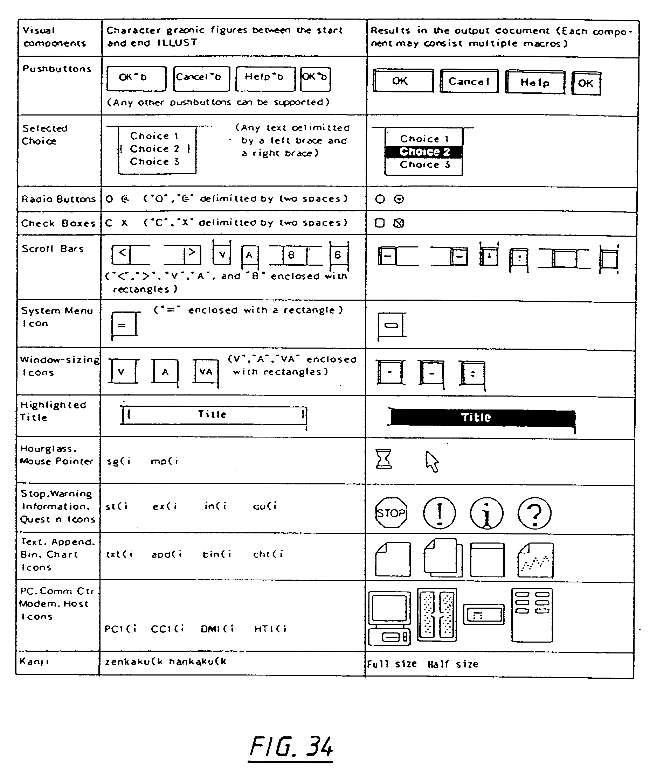

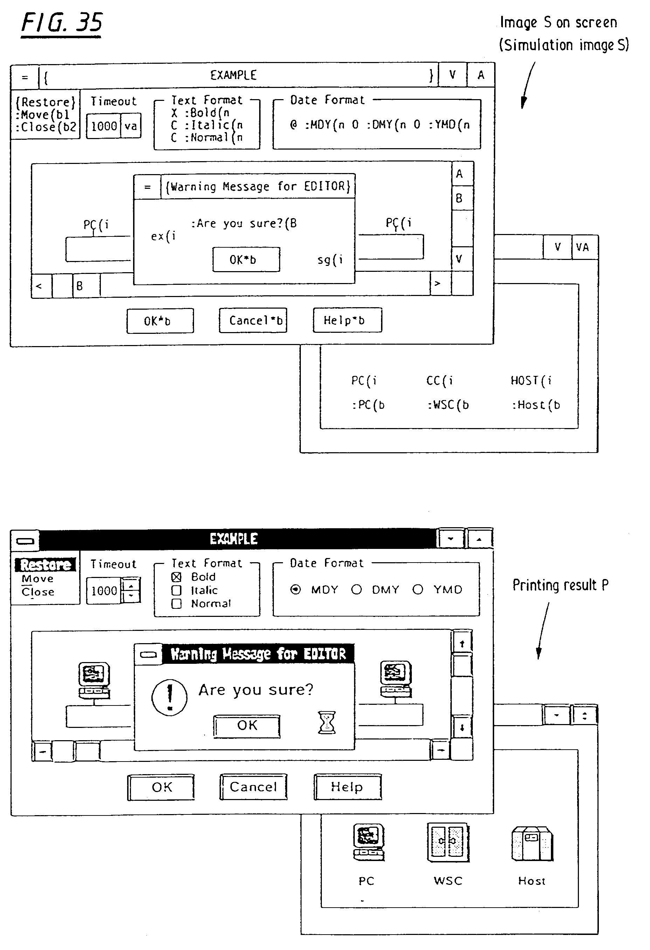

Figure 34 sets out the correspondence between various simplified figures and printing results, including the above examples. According to the above embodiment, various printing results can be produced from simplified figures of a screen configuration, in addition to the case of Figure 2. Figure 35 shows an example of an image S and a printing result P other than the case of Figure 2.

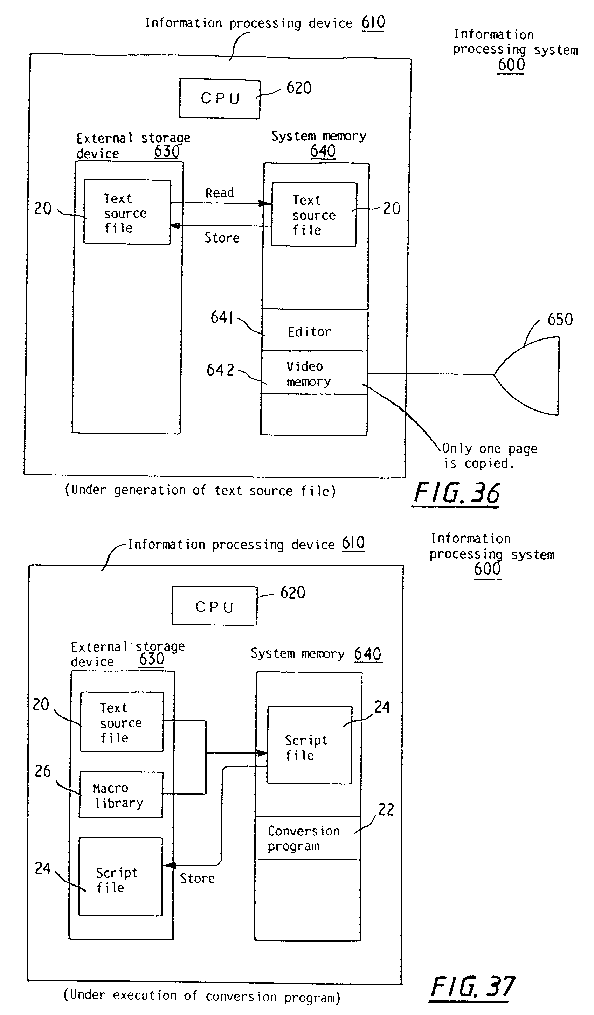

Figure 36 shows the constitution of an information processing system of the above embodiment when the text source file 20 is being generated. In Figure 36, an information processing system 600 includes an information processing device 610 and a display device 650. The information processing device 610 includes a CPU 620, an external storage device 630 such as an HDD, and a system memory 640. The system memory 640 includes an editor 641, which is a program for generating the text source file 20 in the system memory 640 in response to an input from an operator. The editor 641 also serves to display an image S on the screen of a display device 640 by writing part of the text source file 20 to a video memory area 642 of the system memory 640. The text source file 20 thus generated is stored in the external storage device 630 so that it can be reused by reading it when necessary.

Figure 37 shows constitution of the information processing system 600 when the conversion program 22 is being executed. In Figure 37, the conversion program 22 converts the text source file 20 to the script file 24 while referring to the macro library 26. The script file 24 is stored in the external storage device 630 so that it can be reused later.

Figure 38 shows the constitution of the information processing system 600 when the script file 24 is being converted to a format for a printing device. In Figure 38, the compiler program 28 converts the script file 24 to the printable file 30, which has a format in accordance with the type of printing device 660. The printing device 660 produces a printing result P based on the printable file 30. The printable file 30 is stored in the external storage device 630 so that it can be reused later.

According to the above embodiment, a printing result P of a fine figure can be obtained by generating, on a screen, a simplified figure S as a combination of image fonts. Therefore, it is possible to efficiently produce graphical page configurations, for instance, to efficiently produce a specification, a user's guide, etc., for an application program having a graphical user interface.

Incidentally, the printing fonts 301 and 303 are used in the above embodiment. However, where such printing fonts are not prepared on the printing device side, a similar printing result can be obtained by combining other printing fonts such as a period, back slash, etc. It is noted that the present invention can be applied to printed materials other than a specification, a user's guide, etc. of an application program. In the above embodiment, an image S is formed as a combination of image fonts. That is, in the above embodiment, the text source file is described by codes for designating individual image fonts. However, the image information to be used for generating an image that is simple in constitution may also be constituted of dot information.

The invention provides a system and a method which can efficiently produce graphical page configurations. It can, for instance, efficiently produce a specification, a user's guide, etc., for an application program having a graphical user interface.

## Claims

1. A data processing system having a processor (620), a storage device (630, 640), a display device (650), and being connectable to a printing apparatus (660), the system further comprising visualisation means (641) for generating a screen image on the display device (650) from a screen image file (20) stored in the storage device (630, 640), and a printing means for sending print information to the printing apparatus (660) based on a print image file (30) stored in the storage device (630, 640) and relating to the screen image file (20), the system being characterised by:
the screen image file (20) representing a screen image which is simpler in form than a printed image created by the printing apparatus (660) from the corresponding print image file (30); and
generation means for creating the print image file (30) from the screen image file (20) with reference to translating means in the storage device (630, 640) relating elements in the screen image file (20) with specific printing elements to be included in the print image file (30).

2. A system as claimed in Claim 1, wherein the generation means is characterised by:
a converter (22) for converting the screen image file (20) into an intermediate file (24) by identifying key words in the screen image file (20) and replacing each keyword with a related function; and
a collation table (23) in the storage device for associating the key words with their related functions, and accessible by the converter (22).

3. A system as claimed in Claim 2, further characterised by:
a portion of the related functions in the intermediate file being represented by macro names;
a macro library (26) being contained in the storage device (630, 640) and containing a macro program for each macro name; and
a compiler (28) for converting the intermediate file (24) into the print image file (30) by replacing the macro names in the intermediate file with the corresponding macro programs.

4. A system as claimed in claim 3, wherein each of said macro programs includes printing patterns and control information on printing positions to be used for producing, based on particular identifiers in said screen image file, parts of said printing result corresponding to respective parts of said screen image produced by said identifiers.

5. A system as claimed in any preceding claim, wherein said screen image file (20) represents a combination of a plurality of screen image fonts.

6. A method of printing screen information in a data processing system having a processor (620), a storage device (630, 640), a display device (650), and being connectable to a printing apparatus (660), the method comprising the steps of generating a screen image on the display device (650) from a screen image file (20) stored in the storage device (630, 640), and sending print information to the printing apparatus (660) based on a print image file (30) stored in the storage device (630, 640) and relating to the screen image file (20), the method being characterised by the steps of:
(a) representing a screen image in the screen image file (20) which is simpler in form than a printed image to be created by the printing apparatus (660) from the corresponding print image file (30); and
(b) employing generation means to create the print image file (30) from the screen image file (20) with reference to a translation means in the storage device (630, 640) relating elements in the screen image file (20) with specific printing elements to be included in the print image file (30).

7. A method as claimed in Claim 6, wherein the step (b) of employing generation means comprises the steps of:
converting the screen image file (20) into an intermediate file (24) by employing a converter (22) to identify key words in the screen image file (20) and replace each keyword with a related function; and
facilitating the keyword replacement by providing a collation table (23) in the storage device, accessible by the converter (22), which associates the key words with their related functions.

8. A method as claimed in Claim 7, wherein the step (b) of employing generation means further comprising the steps of:
representing a portion of the related functions in the intermediate file (24) by macro names;
establishing a macro library (26) in the storage device (630, 640) containing a macro program for each macro name; and
employing a compiler (28) to convert the intermediate file (24) into the print image file (30) by replacing the macro names in the intermediate file with the corresponding macro programs.

9. A method as claimed in claim 8, wherein each of said macro programs includes printing patterns and control information on printing positions to be used for producing, based on particular identifiers in said screen image file, parts of said printing result corresponding to respective parts of said screen image produced by said identifiers.

10. A method as claimed in any of claims 6 to 9, wherein said screen image file (20) represents a combination of a plurality of screen image fonts.
